# EUROPEAN PATENT APPLICATION

(11) **EP 2 008 554 A1**
(43) Date of publication of application: **31.12.2008**
(21) Application number: 07111345.0
(22) Date of filing: 28.06.2007
(51) Int. Cl.: A47J 31/40, G01F 11/00

(54) **System for storing and dosing a powder**

(71) Applicant: Nestec S.A., 1800 Vevey (CH)
(72) Inventor: Bernhardsgruetter, Raphael, 1350 Orbe (CH); Scorrano, Lucio, 1400 Yverdon-les-Bains (CH)
(74) Representative: Ducreux, Marie

(57) **Abstract**

The invention relates to a system (1) for storing and dosing a powder, especially a coffee powder in a coffee machine, comprising :
- a tank (2) with a top opened extremity (3) and a bottom opened extremity (13),
- a dosing unit (4) comprising dosing means (5), the dosing means cooperating with the bottom opened extremity (3) of the tank and the dosing unit comprising means (6, 7) for closing the top opened extremity (3) of the tank, said means being openable by contact pressure.

The invention relates too to a container and a method for refilling said system.

## Description

The present invention relates to a system for storing and dosing a powder in a coffee machine.

Various automated beverage machines for making hot or cold beverage products are known in the art. In a conventional beverage machine, a metered amount of watersoluble beverage powder, stored in powder refillable tank, and a metered amount of hot or cold water, supplied from a water source, is conveyed into a mixing chamber to produce a beverage or food, which is then dispensed into a cup and served. The refilling of tanks consists in pouring the powder from disposable powder bag type packages for example gusset bags with zipper for re-open and re-close. During this operation, the operator encounters several problems. The first one concerns a significant loss of powder during the transfer of the powder from the refilling tank to the tank to be refilled. As a consequence a certain quantity of powder is loss and there is also an important dusting of the coffee machine by the powder that has fallen out of the tank. A periodic cleaning of the machine is rendered necessary to avoid a dirty look to the machine as well as to avoid hygiene problems. An other problem is due to the contact and stirring of the powder with air when it flows from one container to the other : it can create a problem of hygiene due to possible contamination with the outside environment, especially, when air and water sensitive powders are used. Moreover, the contact and stirring generally causes a loss of aroma of the transferred coffee powder in air. Lastly, this mixing of dry powder, which can be a highly hygroscopic material, can lead to the formation of lumps and cakes that prevent gravity flow and transport of the powder inside the machine.

There exists also problems relative to the coffee powder refilling bags used to refill the coffee machine tanks. One problem is linked to the fact that the machines are often tuned in order to provide the best coffee beverage with a specific coffee powder. If an erroneous type of coffee powder is refilled in the machine, it would then lead to a less quality beverage which would disappoint the consumer. It would be appreciable to provide the coffee machine with a tank enabling its refilling only with coffee powder refilling bags specifically adapted to the machine so as to guarantee the best beverage dispensing.

Therefore, there is need for a satisfactory system, especially adapted for small food or beverage dispensing machine for an office or home, that would allow the refilling of such a machine with a high level of cleanliness and with limited contact with atmosphere and only with a powder specifically adapted to said machine. The system should also aim at storing coffee powder in the machine with limited contact with atmosphere.

The present invention now resolves these deficiencies.

In a first aspect, the invention relates to a system for storing and dosing a powder comprising :
- a tank with a top opened extremity and a bottom opened extremity,
- a dosing unit comprising dosing means, the dosing means cooperating with the bottom opened extremity of the tank and the dosing unit comprising means for closing the top opened extremity of the tank, said means being openable by *contact pressure.*

The system of the present invention corresponds to the part of a coffee powder machine enabling the storage and the dosing of the coffee powder.

Firstly the system comprises a tank of which function is to store the coffee powder. This tank can be of any form. It can be designed with a dissymmetrical form in order to force the operator to place it according to a specific orientation in the coffee machine, for example for having the dosing unit cooperate with motor coupling means. According to the invention, the both top and bottom extremities of this tank are opened. The openings of the extremities are preferably circular, yet other forms may be implemented.

Secondly the system comprises a dosing unit of which function is to take off coffee doses from the tank to feed the mixing chamber of the coffee machine. The dosing unit comprises dosing means which can be of any known types like a screw, an auger, a barrel, a sliding chamber, a rotary pierced disc, ... for delivering a dose of powder to the mixing chamber of the coffee machine. In the system of the present invention, the dosing means cooperate with the bottom opened extremity of the tank so that coffee powder stored in the tank enters the dosing means. With this aim, the bottom opened extremity of the tank dosing unit means and the dosing unit casing usually fit into each other. Due to this fitting the bottom extremity of the tank is closed by the upper part of the dosing unit.

The dosing unit comprises also means for closing the top opened extremity of the tank. These means for closing the top opened extremity of the tank are openable by contact pressure, usually by a vertical down oriented force. In the preferred embodiment of the present invention, the dosing unit means for closing the top opened extremity of the tank comprise several elongated flexible tongues, each tongue having one extremity fixed to the dosing unit casing and the other extremity supporting a clogging means, the form and the orientation of said clogging means being such that they close the top opened extremity of the tank. The closing of the opened extremity of the tank by the clogging means can be obtained by the exact fitting of the surface or edge of the clogging means with the edge of the opening of the top opened extremity of the tank. The elongated flexible tongues and the clogging means are usually placed inside the vessel volume. Then the clogging means_close the top opened extremity of the tank from the inside of the tank. The preferred clogging means consist in a dome-shaped cup especially when the opening of the top opened extremity of the tank present a circular form. Then this dome-shaped cup is oriented so that the exterior surface of the cup sticks to the edge of the opening of the top opened extremity of the tank. With this aim, the length of the elongated flexible tongues is generally set so that they make the clogging means fit to the top opened extremity of the tank. In a specific mode clogging means present fins on their upper surface. Such fins enable a better contact for the application of a contact pressure on the clogging means.

The two parts of the system according to the present invention can be either connected to each other when they are used or isolated for the purpose of washing for example. For this reason, the vessel and the dosing unit present cooperating means for locking or unlocking the vessel on the dosing unit casing. Lastly the dosing unit casing usually comprises cooperating means for locking or unlocking the system on the coffee machine. The system is removable from a coffee machine for washing of the system or for refilling the system with coffee powder ; in small kitchens it is effectively likeable to be able to refill the coffee powder tank when it is dissociated from the machine for example when there is only limited place above the coffee machine.

The system may comprise a cover above the tank top opened extremity. This cover improves the tightness of the tank when it contains coffee powder.

According to the present invention, when the tank of the system is filled with coffee powder and the system is locked on the coffee machine for storing and dosing the powder, the tank is totally closed at its bottom by the dosing unit casing and its top by the dosing unit closing means, then the aroma of the coffee power is preserved. The closure of the tank is systematic and does not depend from the operator who in the prior art could forget to place a cap on the tank bottom opening after having refilled the tank.

When the tank of the system is empty, the vessel cannot be refilled with coffee powder without being connected to the dosing unit of the coffee machine since the both extremities of the tank alone are opened. When the tank is connected to the dosing unit, its both extremities are closed, but the top opened extremity of the tank can be opened by exercising a contact pressure on it. Then, the vessel of the system of coffee machine cannot be refilled easily for example by pouring a coffee powder from a powder bag above the top extremity of tank since the weight of the coffee powder would not be sufficient to open the tank top closing means. The system of the invention can only be refilled by a coffee powder refilling container of which discharge outlet can exercise a pressure contact on the vessel top closing means in order to open them and let coffee powder falls inside the tank.

In a second aspect, the invention relates to a container for storing powder and susceptible to refill a system such as described above, said container comprising :
- a container vessel presenting a closed extremity and an opened extremity,
- a hopper tapering to a discharge outlet, said discharge outlet being able to push the means of the dosing unit that closes the top opened extremity of the system vessel.

The container comprises mainly a vessel with a closed extremity and an opened extremity. Any shape of vessel could be used. In a preferred embodiment of the present invention the vessel is a cylinder, this form enabling easy handling and easy manufacturing. This vessel can be made of at least a material chosen between : plastic, cardboard paper, aluminium or a mixture and/or laminate of the materials. The preferred material is a laminate of sheets of paper, polyethylene (PE), aluminium, polyethylene terephthalate (PET) and polyethylene (PE) according to this order. These materials are preferred as they lead to a low weight vessel, yet any other materials could be used to make the vessel. These materials should present a good humidity barrier and, optionally, good oxygen barrier. In a special embodiment the closed extremity of the vessel can be at least partially transparent by using for example a transparent plastic. Such a transparent extremity enables the control the level of the remaining coffee powder inside the container when this one is refilling the system.

The container of the present invention comprises a hopper of which function is to enable the unloading of the coffee powder from the vessel outside of the container. This hopper or funnel-shaped receptacle enables the coffee powder to pass by gravity into the system placed at the opened extremity of the vessel. The hopper preferably presents a tapering angle α of at least 20°, preferably comprised between 40 and 45°. The hopper tapers to a discharge outlet that faces the opened extremity of the vessel. In one mode of the present invention, the discharge outlet may simply be the end of the hopper and in an other mode of the present invention, the discharge outlet maybe be a specific device coupled to the end of the hopper, preferably a cylinder. The hopper is preferably made of plastic like polyethylene (PE).The discharge outlet is able to open the dosing unit means closing the top opened extremity of the tank by exercising a pressure against them.

Preferably the discharge outlet presents a section inferior to the section of the system vessel top opened extremity so that the discharge outlet is able to push the means of the dosing unit that cooperates with and closes the top opened extremity of the system vessel.

When the preferred embodiment of the system is implemented where the dosing unit means closing the top opened extremity of the tank comprise several elongated flexible tongues and a set of blades closing the top opened extremity of the tank, the application of the discharge outlet of the hopper on the blades cause them to subside since they are supported by flexible tongues. When subsiding, the blades deflect from each other which creates gaps between them and consequently the opening of the top opened extremity of the tank. The coffee powder poured from the discharge outlet of the refilling container can flow between the blades.

Lastly the invention concerns a method for refilling the system of the present invention with a container having a discharge outlet being able to push the means of the dosing unit that cooperates with and closes the top opened extremity of the system vessel, preferably a container as described above. The method consists in pushing the container against the means of the dosing unit that closes the top opened extremity of the system tank in order to open this extremity.

The objects of the present invention present several advantages. The system provides an improved solution for storing coffee powder in coffee machine since it enables the systematic closure of the coffee tank when it comprises coffee powder. Besides, the system avoids its refilling with a refilling container that is not adapted to open the closing means of the tank ; in this way only coffee powders for which the coffee machine is tuned can be introduced in the system. The cooperation between the system of the present invention and the refilling container enables a refilling without loss of bulk material outside the tank. Besides the containers avoid the contact of the bulk material with the atmosphere which can be of paramount importance for a material like coffee powder avoiding its loss of aroma.

The characteristics and advantages of the invention will be better understood in relation to the figures which follow :
- Figure 1 is a perspective view of the system according to the present invention ;
- Figure 2 is a perspective view of the tank of the system according to the present invention ;
- Figure 3 is a perspective view of the dosing unit of the system according to the present invention ;
- Figure 4 is a sectional view of a container usable according to the present invention ;
- Figure 5 is a sectional view of a container and a system according to the present invention.

### Detailed description of the figures.

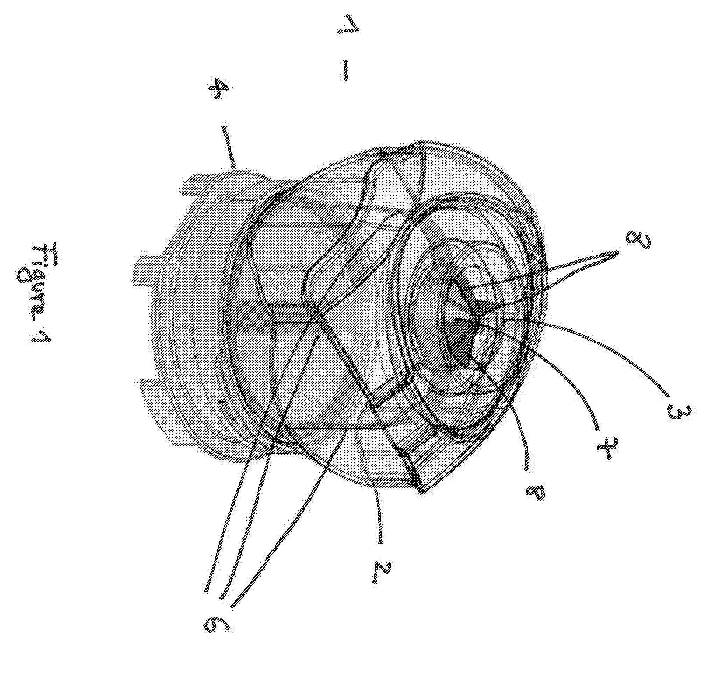

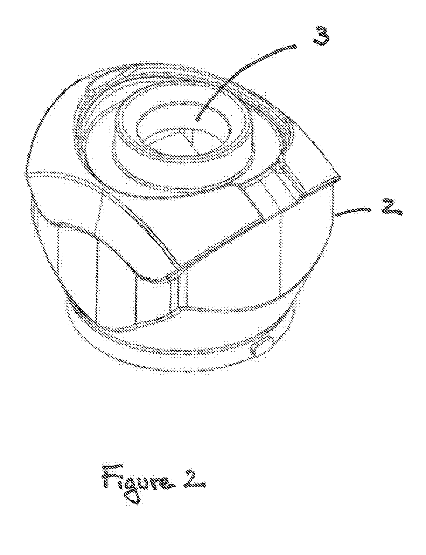

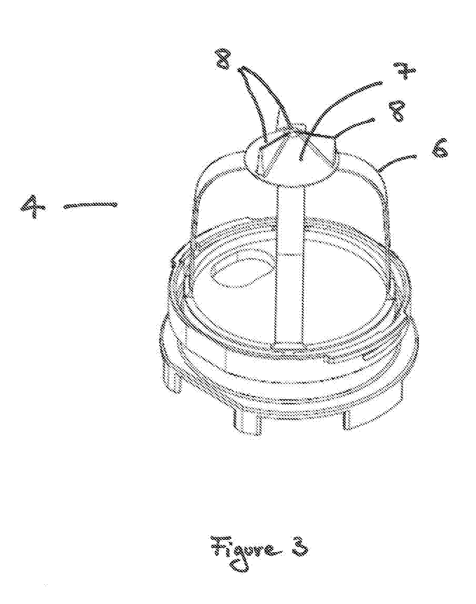

Figures 1 to 5 illustrate the system 1 of the present invention comprising a tank 2 and a dosing unit 4. The tank 2 present a top opened extremity 3 presenting a circular section and a bottom opened extremity 13 that cooperates with the dosing means 5 of the dosing unit 4. The dosing means can be composed of a half disc placed at the upper side of the dosing unit casing and able to rotate around the central axis of the system, its rotation enabling either the opening or the closure of a funnel inside the dosing casing and the delivering of coffee powder in the mixing chamber of the coffee machine. The dosing unit comprises six elongated flexible tongues 6. Each tongue 6 is fixed at one extremity to the dosing unit casing and its other extremity supports a dome-shaped cup 7. This dome-shaped cup 7 present a larger diameter than the circular section the opening of the top opened extremity 3 of the tank and is oriented so that its exterior surface sticks to the edge of the opening of the top opened extremity of the tank 3. In the illustrated embodiment, three fins 8 are placed above the clogging means 7.

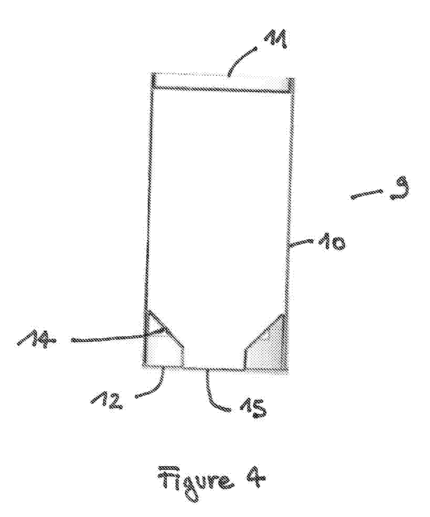

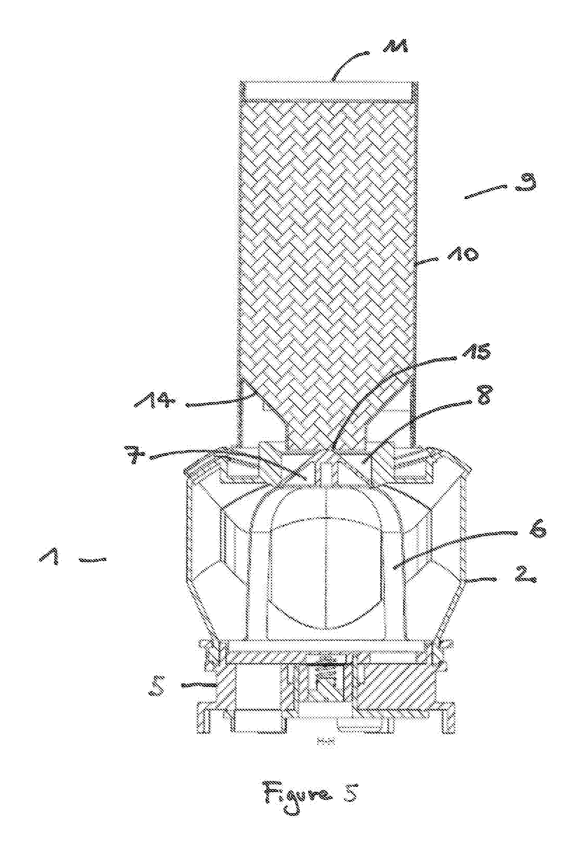

Figures 4 and 5 illustrates in particular the container 9 according to the present invention too. The container comprises a vessel 10 with a closed extremity 11 and an opened extremity 12 and a hopper 14 tapering to a discharge outlet 15 in the form of a cylinder. The sections of the opened extremity 12 and the discharge outlet 15 are circular. The section of the discharge outlet 15 is inferior to the section of the top opened extremity 3 of the tank 2 so that the discharge outlet 15 can be pressed against the fins 8 of the blades 7 and applied a vertical down oriented force that forces the clogging means 7 supported by the flexible tongues 6 to deflect downwards. This deflection creates a gap between the surface of dome-shaped cup 7 and the edge of the opening of the top opened extremity 3 of the tank 2 enabling the coffee powder stored in the container to flow directly in the tank 2 by slipping above the surface of the dome-shaped cup with limited contact with the atmosphere. The system avoids the loss of coffee powder during the tank refilling since the coffee powder is guided by the hopper 14 and the discharge outlet 15 directly in the container 9.

## Claims

1. System (1) for storing and dosing a powder comprising :
- a tank (2) with a top opened extremity (3) and a bottom opened extremity (13),
- a dosing unit (4) comprising dosing means (5), the dosing means cooperating with the bottom opened extremity (3) of the tank and the dosing unit comprising means (6, 7) for closing the top opened extremity (3) of the tank, said means being openable by contact pressure.

2. System according to Claim 1 where the dosing unit means (6, 7) for closing the top opened extremity (3) of the tank are openable by a vertical down oriented force.

3. System according to Claim 1 or 2 where the dosing unit means for closing the top opened extremity (3) of the tank comprise several elongated flexible tongues (6), each tongue having one extremity fixed to the dosing unit casing and the other extremity supporting a clogging means (7), the form and the orientation of said clogging means_(7) being such that they close the top opened extremity (3) of the tank.

4. System according to Claim 3 where the elongated flexible tongues (6) and the clogging means (7) are placed inside the tank volume.

5. System according to Claims 3 or 4 where the clogging means (7) close the top opened extremity (3) of the tank from the inside of the tank.

6. System according to Claim 5 where the clogging means (7) are a dome-shaped cup.

7. System according to any claims 3 to 6 where the length of the elongated flexible tongues (6) is set so that they make the clogging means_(7) fit to the top opened extremity (3) of the tank.

8. System according to any of claims 3 to 7 where clogging means (7) present fins (8) on its upper surface.

9. System according to any previous claims where the tank (2) and the dosing unit (4) present cooperating means for locking or unlocking the vessel on the dosing unit casing.

10. System according to any previous claims where the dosing unit casing comprises cooperating means for locking or unlocking the system on a coffee machine

11. System according to any previous claims comprising a cover above the tank top opened extremity (3).

12. Container (9) for storing powder and susceptible to refill a system (1) according to any one of claims 1 to 11, said container comprising :
- a vessel (10) presenting a closed extremity (11) and an opened extremity (12),
- a hopper (14) tapering to a discharge outlet (15), said discharge outlet being able to push the means (6, 7) of the dosing unit (4) that cooperates with and closes the top opened extremity (3) of the system vessel (2).

13. Container according to Claim 12, where the discharge outlet (15) presents a section inferior to the section of the system tank top opened extremity (3).

14. Container according to Claim 12 or 13 where the discharge outlet (15) is a cylinder.

15. Method for refilling a system according to any one of claims 1 to 11 with a container (9) having a discharge outlet (15) being able to push the means (6, 7) of the dosing unit (4) that cooperates with and closes the top opened extremity (3) of the system vessel (2),
where the container (9) is pushed against the means (6, 7) of the dosing unit that cooperates with and closes the top opened extremity of the system tank in order to open the top opened extremity (3) of the tank.

16. Method for refilling a system according to any Claim 15 with a container (9) according to Claim 12 to 14.

## Amended claims

### Amended claims in accordance with Rule 137(2) EPC.

**1.** Refillable multi-dose container (1) for storing a flowable product comprising :
- a tank (2) with a top opened extremity (3),
- means (4) for closing the top opened extremity (3) of the tank (2), said means being openable by exercising contact pressure on them and closable by stopping contact pressure on them.

**2.** Refillable multi-dose container according to Claim 1, wherein means (4) for closing the top opened extremity (3) of the tank are openable by exercising a vertical downward oriented contact pressure on them.

**3.** Refillable multi-dose container according to any of preceding claims, wherein means (4) for closing the top opened extremity (3) of the tank comprise several flexible tongues (5), each tongue having a fixed extremity (51, 71, 61) and an other free extremity (52, 62, 72), the form and the orientation of said free extremities being such that they close the top opened extremity (3) of the tank at rest and that they move away from one another or that they move away from the top opened extremity (3) of the tank (2) under a contact pressure

**4.** Refillable multi-dose container according to Claim 3, wherein at rest the whole tongues (5) form a cone, the top of which being oriented to the interior side to the tank (2).

**5.** Refillable multi-dose container according to Claim 3 or 4, wherein means (4) for closing the top opened extremity (3) of the tank comprise two sets of several flexible tongues (6, 7), each set of flexible tongues forming a cone with pierced apertures (64, 74) and the two sets being assembled one to the other so that the tongues of each set recover the pierced apertures of the other set.

**6.** Refillable multi-dose container according to Claim 5, wherein one set of flexible tongues (6) form a cone presenting wider pierced apertures (64) than the other set of flexible tongues (7).

**7.** Refillable multi-dose container according to Claim 3, wherein means (4) for closing the top opened extremity (3) of the tank comprise a fixed central piece (8) in contact with the free extremities of the flexible tongues (52).

**8.** Refillable multi-dose container according to Claim 7, wherein the fixed central piece presents a conical shaped part.

**9.** Refillable multi-dose container according to any of the precedent claims wherein it comprises a cover (9) above the tank top opened extremity (3).

**10.** Refillable multi-dose container according to Claim 9 wherein :
- the top opened extremity (3) is a cylinder neck presenting :
. an external thread for cooperating with a thread of the cover, and
. an internal thread for cooperating with a thread of the means (4) for closing the top opened extremity of the tank, and
- the cover and the means for closing the top opened extremity of the tank present connection means so that when the cover is respectively screwed up or down around the cylinder neck, the means for closing the top opened extremity of the tank are screwed up or down inside the cylinder neck, and
- said connection means being releasable when the cover and the means for closing the top opened extremity of the tank are screwed up to their highest position.

**11.** Refillable multi-dose container according to Claim 3, wherein the fixed extremities (52) of the tongues are hooked near the bottom of the tank.

**12.** Refillable multi-dose container according to Claim 11, wherein the free extremities (52) of the flexible tongues support clogging means (18), the form and the orientation of said clogging means being such that they close the top opened extremity (3) of the tank (2).

**13.** Refillable multi-dose container according to Claim 12, wherein the clogging means (18) are a dome-shaped cup.

**14.** Refillable multi-dose container according to any of the precedent claims wherein the tank presents a bottom opened extremity (9) that is able to cooperate with dosing means (11).

**15.** Machine for preparing beverage from a flowable beverage ingredient comprising :
- a refillable multi-dose container according to any of the precedent claims,
- a dosing unit (11) comprising dosing means,
- diluent feeding means,
- means for mixing a dose of flowable beverage ingredient and diluent.

**16.** System for preparing beverages by mixing of a flowable beverage concentrate with a diluent comprising :
- a machine comprising :
. a refillable multi-dose container according to any of claims 1 to 14,
. a dosing unit (11) comprising dosing means,
. diluent feeding means,
. means for mixing a dose of flowable beverage concentrate and the diluent.
- a container (12) for storing the flowable beverage concentrate and refilling the refillable multi-dose container of the machine, said container comprising :
. a vessel (13) presenting a closed end (14) and an opened end (15),
. a hopper (16) placed inside the vessel and tapering to a discharge outlet (17) in direction of the vessel opened end (4), said discharge outlet being able to push the means (4) for closing the top opened extremity (3) of the tank of the refillable multi-dose container.

**17.** System according to Claim 16, where the discharge outlet (17) of the container (12) for storing the flowable beverage concentrate presents a section inferior to the section of the tank top opened extremity (3) of the refillable multi-dose container of the machine.

**18.** System according to any of Claims 16 or 17 where the container (17) for storing the flowable beverage ingredient comprises a tearable membrane (19) closing the hopper (16) and the vessel (13).

**19.** System according to any of Claims 16 to 18 where the refillable multi-dose container is refilled by pushing the discharge outlet (17) of the container for storing the flowable beverage concentrate against the means (4) for closing the top opened extremity (3) of the tank (2) refillable multi-dose container in order to open the top opened extremity (3) of the tank.

**20.** System according to Claims 18 where the refillable multi-dose container is refilled by pushing the discharge outlet (17) of the container for storing the flowable beverage concentrate against the means (4) for closing the top opened extremity (3) of the tank (2) refillable multi-dose container in order to open the top opened extremity (3) of the tank and simultaneously break the tearable membrane (19) of the container (12) for storing the flowable beverage ingredient.

**21.** System comprising :
- a machine for processing a bulk material comprising :
. a refillable multi-dose container according to any of claims 1 to 14,
. a dosing unit comprising dosing means,
. means for processing a dose of bulk material,
- a container (12) for storing the bulk material and refilling the refillable multi-dose container of the machine, said container comprising :
. a vessel (13) presenting a closed end (14) and an opened end (15),
. a hopper (16) placed inside the vessel and tapering to a discharge outlet (17) in direction of the vessel opened end (4), said discharge outlet being able to push the means (4) for closing the top opened extremity (3) of the tank of the refillable multi-dose container.
